## Europäisches Patentamt
## European Patent Office
## Office européen des brevets

(11) Veröffentlichungsnummer : **0 135 707 B1**

(12) **EUROPÄISCHE PATENTSCHRIFT**

(45) Veröffentlichungstag der Patentschrift :
23.03.88

(51) Int. Cl.⁴ : **A 47 J 37/12**

(21) Anmeldenummer : **84108833.9**

(22) Anmeldetag : **26.07.84**

(54) **Elektrisch beheizte Friteuse.**

(30) Priorität : **18.08.83 DE 3329793**

(43) Veröffentlichungstag der Anmeldung :
**03.04.85 Patentblatt 85/14**

(45) Bekanntmachung des Hinweises auf die Patenterteilung : **23.03.88 Patentblatt 88/12**

(84) Benannte Vertragsstaaten :
**AT CH DE FR GB IT LI SE**

(56) Entgegenhaltungen :
**CH-A-  608 182**
**FR-A-  935 297**
**FR-A- 2 167 557**
**FR-A- 2 167 558**
**FR-A- 2 244 436**
**GB-A-  668 613**
**US-A- 2 360 727**
**Prospekt "Das Wirtschaftswunder" der Firma Wamsler Küchentechnik, Mai 1985**

(73) Patentinhaber : **E.G.O. Elektro-Geräte Blanc u. Fischer**
**Rote-Tor-Strasse Postfach 11 80**
**D-7519 Oberderdingen (DE)**

(72) Erfinder : **Knauss, Hermann**
**Sonnenhalde 6**
**D-7519 Oberderdingen (DE)**

(74) Vertreter : **Patentanwälte Ruff und Beier**
**Neckarstrasse 50**
**D-7000 Stuttgart 1 (DE)**

## Beschreibung

Die Erfindung betrifft eine elektrisch beheizte Friteuse nach dem Oberbegriff des Anspruchs 1.

Durch die FR-A-2 244 436 ist eine Friteuse gemäß Oberbegriff des Anspruches 1 mit einem Strömungsumwälz-Schacht für das Fritierfett bekanntgeworden, an dessen Außenseite elektrische Widerstandsheizkörper angeordnet sind. Nähere Einzelheiten, wie diese Widerstandskörper auszubilden und den Schachtwandungen zuzuordnen sind, sind nicht angegeben.

Durch die US-A-2 360 727 ist auch die Verwendung von Rohrheizkörpern zur Beheizung einer Friteuse bekannt, jedoch werden diese Rohrheizkörper vom Fritierfett umströmt, weshalb zwangsläufig entweder Überhitzungen des Fritierfettes auftreten oder mit so geringer Leistung gefahren werden muß, daß sich extrem hohe Aufheizzeiten ergeben.

Der Erfindung liegt die Aufgabe zugrunde, eine Friteuse der eingangs genannten Art zu schaffen, bei welcher das Fritierfett einerseits äußerst schonend beheizt und andererseits sehr schnell auf die jeweilige Fritiertemperatur gebracht bzw. auf der jeweils erwünschten Fritiertemperatur gehalten werden kann.

Diese Aufgabe wird durch die Merkmale des Anspruches 1 gelöst. Obwohl der Rohrheizkörper nicht in unmittelbaren Berührungskontakt mit dem Fritierfett gelangt, führt der metallisch großflächige Wärmeleitanschluß und die dem Fritierfett durch den Strömungsumwälz-Schacht vermittelte Strömung dazu, daß das Fett die Wärmeenergie schnell und für das gesamte Fettvolumen sehr gleichmäßig, d. h. ohne punktuelle Überhitzung, aufnehmen kann. Dadurch ergibt sich auch eine wesentlich geringere Fettbelastung und damit eine beträchtlich erhöhte Standzeit des Fritierfettes. Zweckmäßig sind alle Rohrheizkörper in der beschriebenen Weise angeordnet.

Eine besonders vorteilhafte Weiterbildung ergibt sich aus den Merkmalen des Anspruches 2. Durch die Profilierungen der Wandung wird eine sehr hohe Festigkeit auch bei sehr geringer Wandungsdicke erzielt, was den Wärmeübergang noch verbessert. Durch die Profilierung der Wandung wird aber auch die Kontaktfläche zwischen Rohrheizkörper und Wandung wesentlich erhöht.

Zur Erzielung günstiger Strömungsverhältnisse bei optimaler Fritierfettmenge ist die Weiterbildung nach Anspruch 3 vorgesehen. Dadurch ergeben sich auch große Horizontalquerschnitte des Fritierraumes gegenüber kleineren Horizontalquerschnitten des Schachtes.

Eine sehr einfache Ausbildung des Erfindungsgegenstandes ergibt sich durch die Merkmale des Anspruches 4. Es hat sich gezeigt, daß geradlinige stabförmige Rohrheizkörper eine wesentlich höhere Standzeit haben als gebogene Rohrheizkörper, nämlich nahezu unverwüstlich sind. Auch lassen sich diese Rohrheizkörper elektrisch einfach, beispielsweise in Reihe, miteinander verbinden und an ein Netzkabel anschließen.

Zur genauen Temperatursteuerung des Fritierfettes ist zweckmäßig eine Weiterbildung nach Anspruch 5 vorgesehen. Dieser Temperaturfühler hat eine große Oberfläche, so daß er sehr schnell anspricht und die Fett-Temperatur innerhalb sehr enger Grenzwerte geregelt werden kann.

Ein sehr kräftiges und in seinen Strömungswegen präzise bestimmtes Strömungsverhalten des Fritierfettes kann durch die Merkmale des Anspruches 6 erzielt werden. In den aufsteigenden Strömungskanälen wird das Fritierfett beheizt und dadurch in seiner Strömung beschleunigt, wobei das aufsteigende aufgeheizte Fritierfett dann im Wandungsbereich in den Fritierraum gelangt, in welchem Bereich es am meisten durch Wandberührung abgekühlt wird. Aber auch das absteigende Fritierfett kann über die gemeinsamen Kanalwandungen bereits in einer ersten Phase aufgeheizt werden.

Durch die Merkmale nach Anspruch 7 ergibt sich bei weiter verbessertem Strömungs- und Aufheizverhalten ein schnelles und sicheres Abscheiden fester Partikel in den Sumpfraum, eine einfache Reinigung des Strömungsschachtes sowie der Strömungskanäle und eine genau bestimmte Lage des Fritierkorbes gegenüber den oberen Enden der Strömungskanäle.

Es ist aber auch möglich, eine einfache Reinigung sowie einen einfachen Aufbau der Friteuse unter Vermeidung schwer zugänglicher Schmutzwinkel durch die Weiterbildung nach Anspruch 8 zu erreichen.

Soll die Friteuse mit einem gegenüber ihrem Raumvolumen geringeren Fettvolumen gefahren werden, so kann dies in sehr einfacher Weise durch die Ausbildung nach Anspruch 9 erreicht werden. Dadurch kann die Friteuse in einfacher Weise den jeweiligen Erfordernissen, beispielsweise der pro Zeiteinheit anfallenden Fritiermenge, angepaßt werden.

Sind kompensierende Wärmeübertragungsstreifen vorgesehen, so können diese in einfacher Weise durch Blechstreifen aus einfachem Baustahl oder dergleichen gebildet sein und zweckmäßig gegenüber der Wandung des Hauptbehälters eine größere Kontaktfläche als gegenüber dem Rohrheizkörper haben.

Es hat sich gezeigt, daß die erfindungsgemäße Friteuse die insbesondere als Hochleistungsfriteuse zur kommerziellen Verwendung geeignet ist, einen relativ niedrigen Energiebedarf von 0,5 bis 0,7 kW pro Liter Fritierfett hat und dabei trotzdem bei Abkühlung ein sehr schnelles Wiederhochfahren der Fett-Temperatur gewährleistet. Auch die Oberflächenbelastung kann erheblich, d. h. bis auf das 1,5 bis 2-fache der bisherigen Heizflächenbelastung angehoben werden.

Ausführungsbeispiele der Erfindung sind in den Zeichnungen dargestellt und werden im folgenden näher beschrieben. Es zeigen

Fig. 1 eine erfindungsgemäße Friteuse in teilweise geschnittener perspektivischer Darstellung,

Fig. 2 ein weiteres Ausführungsbeispiel einer Friteuse im vertikalen Querschnitt,

Fig. 3 die Friteuse gem. Fig. 2 in Seitenansicht,

Fig. 4 die Friteuse gemäß Fig. 3 in Draufsicht,

Fig. 5 und 6 zwei weitere Ausführungsbeispiele für Anordnungen von Rohrheizkörpern im Querschnitt,

Fig. 7 die Anordnung von Rohrheizkörpern und Temperaturfühler an einem Rohr,

Fig. 8 ein weiteres Ausführungsbeispiel einer Friteuse in einer Darstellung entsprechend Fig. 2,

Fig. 9 die Friteuse gemäß Fig. 8 in umgerüstetem Zustand

Fig. 10 die Friteuse gemäß den Fig. 8 und 9 in Ansicht,

Fig. 11 und 12 schematische Vertikalschnitte durch weitere Ausführungsformen von Friteusen,

Fig. 13 ein vergrößertes Detail der Beheizung nach den Fig. 11 und 12,

Fig. 14 einen vergrößerten Detailschnitt nach der Linie XIV-XIV in Fig. 13 und

Fig. 15 und 16 Details einer Temperaturfühlerbefestigung in vergrößertem Maßstab.

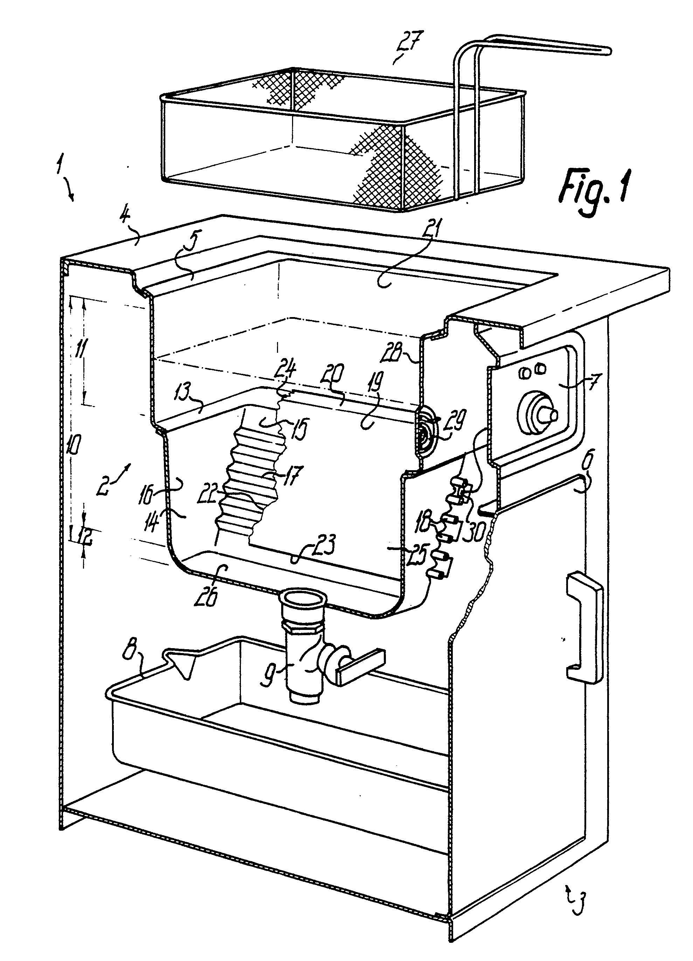

Die in Fig. 1 dargestellte Friteuse 1 weist einen in Draufsicht im wesentlichen länglich rechteckigen Hauptbehälter 2 aus rostfreiem Stahlblech auf, der mit seinem oberen, nach außen abgewinkelten Rand 5 hängend in einen vertieften Ausschnitt der horizontalen Deckplatte 4 eines aus gleichartigem oder anderem Werkstoff bestehenden Schrankes 3 eingesetzt ist. Der Schrank 3 weist an der vorderen Schmalseite eine Türe 6 und über dieser eine Armaturenblende 7 für Kontrolleuchten, Schalter oder dergl. auf. Auf dem Boden des Schrankes steht eine Auffangwanne 8 über der ein in den Boden des Hauptbehälters 2 eingesetzter vertikaler Ablaßstutzen 9 liegt, der mit einem handbetätigbarem Schließventil versehen ist.

Der Hauptbehälter 2 ist im wesentlichen aus zwei übereinanderliegenden Teilen zusammengesetzt, von denen der obere die oberen aufrechten, bis zum Rand 5 reichenden Wandungen des in Draufsicht weiteren Teiles des Hauptbehälters 2 bildet, während der untere, napfförmige Teil mit seiner Unterseite an einem unteren, nach innen vorstehenden Schulterrand des oberen Teiles befestigt ist und in seinem Boden den Ablaß-Stutzen 9 trägt. Es ist auch denkbar den ganzen Hauptbehälter oder einem der Teile durch zwei Halbschalen zu bilden, deren Anschlußebene durch eine aufrechte Ebene insbesondere eine Symmetrieebene gebildet ist oder den Hauptbehälter aus miteinander verschweißten, im wesentlichen ebenen Blechplatten zusammzusetzen, wobei in diesem Fall die Schweißnähte an der Innenseite des Behälters, insbesondere im Bereich der einspringenden Ecken als Kehlnähte ausgebildet sind, so daß sich glatte Innenflächen auch im Bereich dieser Ecken ergeben.

In Fig. 1 ist in etwa halber Höhe des oberen weiteren Abschnittes des Hauptbehälters 2 strichpunktiert der Oberflächenspiegel des Fritierfettes angedeutet, den dieses bei nicht mit Fritiergut gefüllter Friteuse einnimmt. Nach Eingeben der maximalen Fritiergutmenge kann der Fritierfettspiegel bis nahe an den Rand 5 reichen, d. h. daß sich der Fritierfettraum 10 von dieser maximalen Höhe des Fritierfettspiegels bis zum Boden des Hauptbehälters 2 erstreckt. Der Fritierraum 11 reicht von gleicher Höhe nach unten demgegenüber nur bis geringfügig oberhalb eines nach innen vorspringenden, entlang der Außenwandungen umlaufenden Stufenbodens 13, welcher den Fritierraum 11 gegenüber einem unmittelbar darunter anschließenden Strömungsumwälz-Schacht 14 absetzt, der durch den unteren Behälterteil gebildet und im Anschluß an den Stufenboden 13 um dessen Gesamtbreite in seinen Horizontalquerschnitten kleiner als der Fritierraum 11 ist. Die beiden einander gegenüberstehenden, zur Front der Friteuse rechtwinkligen Längs-Wandungen 15 des Schachtes 14 sind unter gleichen spitzen Winkeln nach außen geneigt, während die beiden rechtwinklig dazu stehenden Wandungen 16 vertikal sind. Die Wandungen 15 sind über ihre ganze Länge und eine Höhe von mehr als der Hälfte der Wandungshöhe mit sickenartigen, wellenförmig unmittelbar ineinander übergehenden Profilierungen versehen ; die Sicken 17 bilden an der Außenseite der jeweiligen Wandung 15 durchgehende, im Querschnitt prismenförmige Nuten für die Aufnahme jeweils eines über die ganze Länge der Wandung durchgehenden, stabförmig geradlinigen Rohrheizkörpers 18. Die Rohrheizkörper 18 sind in metallischer Verbindung auf die Außenfläche der jeweiligen Wandung 15 aufgebracht, beispielsweise aufgelötet oder aufgeschweißt, vorzugsweise aber nach einem speziellen Lötverfahren, z. B. mit einem Nickel-Phosphor-Lot, das eine thermisch nicht mehr lösbare Verbindung schafft und auch « Anlegieren » genannt wird. Mit einem Wandabstand von mehreren cm ist benachbart zur Innenfläche jeder Wandung 15 ein durch ein Blech gebildeter, herausnehmbarer Einsatz 19 vorgesehen, der einen oberen, mit geringem Abstand oberhalb des zugehörigen Abschnittes des Stufenbodens 13 liegenden und zu diesem annähernd parallelen abgewinkelten Randstreifen 20 aufweist, der mit Abstand von der gegenüberstehenden aufrechten Wandung 21 des Fritierraumes 11 liegt. Der mit seinen Seitenkanten dicht an die Wandungen 16 anschließende Einsatz 19, der mit Abstand oberhalb des Bodens des Hauptbehälters 2, jedoch unterhalb des untersten Rohrheizkörpers 18 endet, begrenzt einen entlang der Sicken 17 vorbeiführenden aufsteigenden Strömungskanal 22, dessen unteres Ende 23 mit geringem Abstand oberhalb des Bodens des Hauptbehälters 2 liegt und dessen oberes, durch den Stufenboden 13 und den Randstreifen 20 begrenztes abgewinkeltes Ende 24 gegen die benachbarte Wandung 21 gerichtet ist. Der mittlere Raum zwischen den beiden aufsteigenden Strömungskanälen 22 bildet einen absteigenden Strömungskanal 25 für das Fritierfett, das somit zwischen den Einsätzen 19 aus dem Fritierraum 11 nach unten strömt, über dem Boden des Hauptbehälters 2 unter Teilung nach beiden Seiten in die Strömungskanäle 22 gelangt, in diesen unter Aufheizung und Beschleunigung wieder nach oben strömt und somit dauernd in mindestens zwei geschlossenen, vom Fett-Oberflächenspiegel bis zum Boden des Hauptbehälters 2 reichenden Kreisläufen wirksam umgewälzt wird. Der Raum unterhalb der unteren Enden 23 der Strömungskanäle 22 bildet einen sog. « kalten Sumpf », d. h. einen vom Boden 26 des Hauptbehälters 2 begrenzten Sumpfraum 12, in dem die Temperatur des Fettes wesentlich unter der übrigen Behältertemperatur liegt und in dem sich Rückstände ansammeln können, die durch das Sieb eines für die Nahrungsmittelaufnahme bestimmten und in den Fritierraum 11 zu stellenden Fritierkorbes 27 fallen : der Fritierkorb 27 steht dabei auf den Randstreifen 20, so daß das in deren Bereich austretende aufgeheizte Fritierfett unmittelbar in den Fritierkorb 27 strömt.

Unmittelbar oberhalb des Stufenbodens 13 ist an der zur Front benachbarten Wandung 28 des Fritierraumes 11 ein Fett-Temperaturfühler 29 angeordnet, der in eine in die Wandung eingeprägte flache kreisförmige Vertiefung an der Außenseite dieser Wandung 28 großflächig anliegend eingesetzt und in einem Abstand von ca. 2 bis 3 mm von seinem Basisblech liegt, damit Fett am gesamten Umfang vorbei strömen kann. Der Temperaturfühler 29 dient zur von Hand veränderbaren Regelung der elektrischen Stromversorgung der Rohrheizkörper 18. Zwischen zwei Rohrheizkörpern 18 und in entsprechender metallischer Verbindung mit diesen und/oder mit dem dazwischenliegenden Abschnitt der Wandung 15 ist ein geradliniger Temperaturfühler 30 vorgesehen, welcher als Trockengehschutz unmittelbar auf die Temperatur der Rohrheizkörper 18 anspricht, so daß auch bei unterhalb des Temperaturfühlers 29 stehendem Fettspiegel Brandgefahren vermieden sind. Durch die beschriebene Temperaturmessung ist eine ausgezeichnete, schnell zugreifende und sowohl den Einfluß der Flüssigkeitstemperatur als auch den Beheizungseinfluß fassende Regelung der Temperaturbegrenzung möglich.

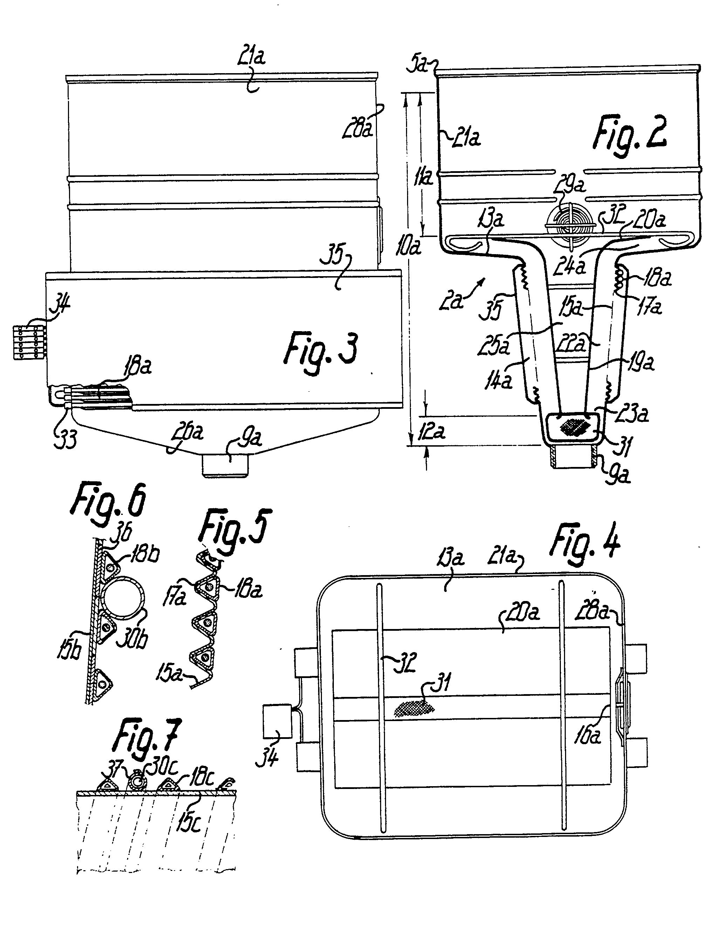

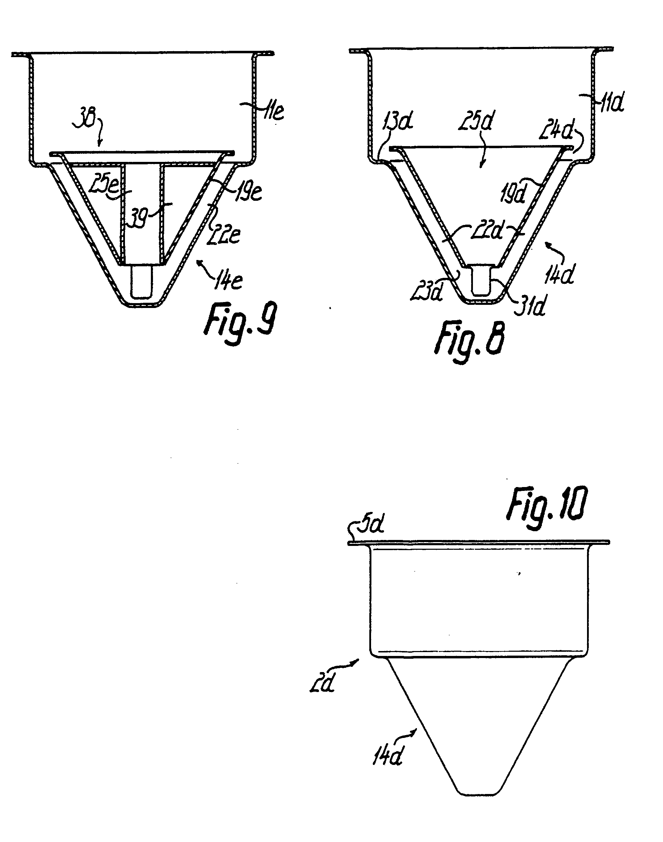

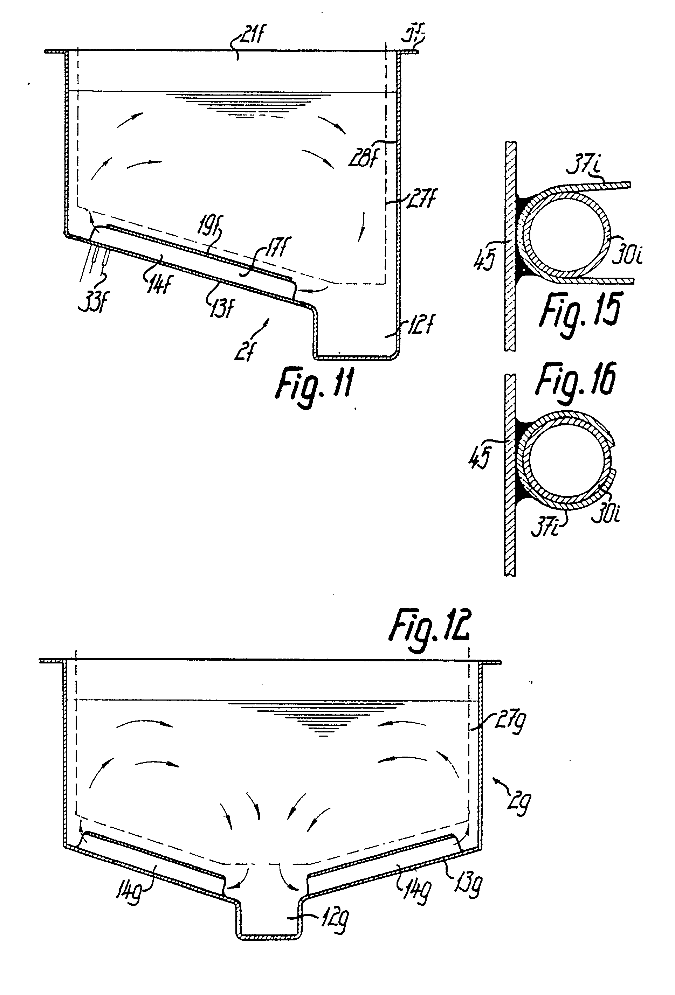

In den Fig. 2 bis 16 sind füreinander entsprechende Teile die gleichen Bezugszeichen wie in Fig. 1, jedoch in den Fig. 2 bis 5 mit dem Index « a », in Fig. 6 mit dem Index « b », in Fig. 7 mit dem Index « c », in Fig. 8 mit dem Index « d », in Fig. 9 mit dem Index « e », in Fig. 11, 13, 14 mit dem Index « f », in Fig. 12 mit dem Index « g » und in den Fig. 15 und 16 mit dem Index « i » verwendet.

Die in den Fig. 2 bis 5 ohne Schrank und Deckplatte dargestellte Friteuse weist an den Längsseiten einen wesentlich breiteren Stufenboden 13a auf, derart, daß der Schacht 14a eine Breite von etwa drei Fünftel der gesamten Breite des Fritierraumes 11a hat. Beide Einsätze 19a sind durch Querverstrebungen zu einem in sich formstabilen Baukörper zusammengefaßt, der am unteren Ende einen Siebkorb 31 trägt, welcher unmittelbar oberhalb des Bodens 26a liegt. Der Boden 26a ist zum Ablaßstutzen 9a von allen Seiten her schräg abfallend ausgebildet. Der die Einsätze 19a aufweisende Baukörper ist am oberen Ende mit querliegenden Tragbügeln 32 verbunden, welche mit kufenartig gekrümmten Endabschnitten auf die Schulterböden 13a aufsitzen und an denen die oberen Randstreifen 20a befestigt sind, so daß der Baukörper bzw. die Einsätze 19a hängend in den Schacht 14a hineinragen. Der durch ein spiralförmig gebogenes Rohr gebildete Temperaturfühler 29a ist bei dieser Ausführungsform in einer kreisförmigen Vertiefung an der Innenseite der Rückwand 28a des Fritierraumes 11a angeordnet, so daß er unmittelbar von der zu messenden Flüssigkeit umspült wird. Die Anschlußenden 33 der Rohrheizkörper 18a liegen allesamt an einer Schmalseite, beispielsweise der Vorderseite, des Hauptbehälters 2a, so daß sie mit einem gemeinsamen Anschlußklemmenblock 34 verbunden werden können. Im Bereich der Rohrheizkörper 18a, von denen der unterste mit Abstand oberhalb des Sumpfraumes 12a liegt, sind die Wandungen 15a an den Außenseiten mit beispielsweise aus Blech bestehenden Abdeckungen 35 versehen, welche die Rohrheizkörper 18a schützen, gegen Wärmeabstrahlung isolieren und glatte Außenflächen im Bereich des Schachtes gewährleisten. Die Abdeckungen 35 können abnehmbar ausgebildet sein. Es ist des weiteren demkbar, außer an den Längswandungen auch an den quer dazu liegenden Schmalseiten, also an den Außenseiten der zugehörigen Wandungen des Schachtes 14a zusätzliche Rohrheizkörper anzubringen und dadurch die Heizleistung sowie die Heizübertragungsfläche nochmals zu erhöhen. Diese zusätzlichen Rohrheizkörper können in ähnlicher Weise wie die beschriebenen an der Wandung angebracht sein.

Statt kreisförmige Querschnitte, wie in Fig. 2 dargestellt, können die Rohrheizkörper 18a gemäß Fig. 5 auch davon abweichende Querschnitte zur Erhöhung der Kontaktfläche mit der Wandung 15a aufweisen. Im dargestellten Ausführungsbeispiel sind die Rohrheizkörper 18a im Querschnitt annähernd gleichseitig dreieckförmig mit abgerundeten Eckbereichen, derart, daß sie an zwei Dreieckseiten im wesentlichen ganzflächig an den Sickenschenkeln der jeweils zugehörigen Sicke 17a anliegen. Die Sicken 17a sind im Querschnitt nach Art eines gleichförmigen Wellenprofiles ausgebildet.

Wie Fig. 6 zeigt, können die, im Querschnitt beispielsweise rechtwinklig, gleichschenklig dreieckförmigen Rohrheizkörper 18b auch mittelbar mit der Wandung 15b wärmeleitend integriert sein, wobei in diesem Fall zwischen der Außenfläche der Wandung 15b und der Wäremübertragungsfläche des Rohrheizkörpers 18b Wärme-Übertragungsstreifen 36 aus einem gegenüber der Wandung 15b besser wärmeleitfähigen Werkstoff, beispielsweise Baustahl, vorgesehen sind. Die Wärme-Übertragungsstreifen 36, deren Dicke etwa in der Größenordnung derjenigen in der Wandung 15b liegt, aber auch größer sein kann, haben eine gegenüber der an ihnen anliegenden Kontaktfläche des Rohrheizkörpers 18b größere Breite, wobei im dargestellten Ausführungsbeispiel benachbarte Wärme-Übertragungsstreifen 36 mit ihren Längskanten unmittelbar aneinanderstoßen oder einteilig ineinaderübergehen. Der Temperaturfühler 30b steht bei dieser Ausführungsform entlang zweier Mantellinien in unmittelbar wärmeleitender Berührung und/oder metallischer Verbindung mit den beiden benachbarten Rohrheizkörpern 18b und entlang einer weiteren Mantellinie in entsprechender Verbindung mit der Wandung 15b bzw. den zugehörigen Wärme-Übertragungsstreifen 36, so daß eine sehr schnell greifende Messung gewährleistet ist.

Eine der Ausbildung nach Fig. 6 entsprechende Ausbildung ist auch dort möglich, wo der Rohrheizkörper 18c, beispielsweise wendelförmig am Außenumfang einer Rohrwandung 15c angeordnet ist. Bei dieser Ausführungsform steht der zwischen zwei Wendeln des Rohrheizkörpers 18c wendelförmig am Außenumfang der Wandung 15c angeordnete Temperaturfühler 30c nur mit der Wandung 15c in unmittelbar wärmeleitender Verbindung. Zu diesem Zweck ist an der Außenfläche der Wandung 15c ein aus Blech bestehendes Wärmeleitelement 37 in metallischer Verbindung aufgebracht, welches im Querschnitt an den des Temperaturfühlers 30c angepasst und nach Einlegen des Temperaturfühlers durch entsprechendes Falzen eng anliegend um den Umfang des Temperaturfühlers 30c geschlossen ist.

Bei der Ausführungsform nach Fig. 8 sind die Einsätze 19d zu einem herausnehmbaren Baukörper zusammengefasst, wobei die Strömungskanäle 22d im Querschnitt unter einem Winkel von etwa 60° zueinander stehen.

Gemäß Fig. 9 ist der genannte Baukörper durch einen Verdrängungskörper 38 gebildet, der durch dichte Hohlkammern 39 ein gegenüber dem Strömungskanal 25e wesentlich größeres Verdrängungsvolumen aufweist und beispielsweise in derselben Friteuse gegen den Baukörper gemäß Fig. 8 auswechselbar ist, so daß dann mit einer geringeren Fritierfettmenge gearbeitet werden kann. Die Hohlkammern 39 liegen zwischen dem Strömungskanal 25e und den Strömungskanälen 22e.

Der Hauptbehälter 2f der Friteuse gemäß Fig. 11 weist eine über den größten Teil seiner Länge durchgehende, unter einem spitzen Winkel zur Horizontalen schräg nach unten geneigte Bodenwandung 13f auf, an deren tiefsten Stelle sich ein an die zugehörige aufrechte Wandung 28f anschließender Sumpfraum 12f anschließt, der einen sich über die Breite (rechtwinklig zur Zeichenebene) reichenden, gegenüber der Bodenwandung 13f vertieften Kanal bildet. An der Bodenwand 13f sind Blechteile 17f, 19f derart befestigt, daß über die Breite des Fritierraumes nebeneinander und parallel zur Neigungsrichtung der Bodenwandung 13f liegende Strömungsschächte 14f gebildet sind, deren Eintritt oberhalb und am Rand des Sumpfraumes 12f und deren Austritt benachbart zur an die höchste Stelle der Bodenwandung 13f anschließenden aufrechten Wandung liegen. Die Strömungsschächte 14f verlaufen vom Sumpffraum 12f unter einem relativ flachen Winkel, vorzugsweise zwischen 20° und 30°, schräg aufwärts, wie die Bodenwandung 13f. Während in Fig. 11 eine asymmetrische Ausführung mit einseitig angeordnetem Sumpfraum 12f und nach einer Seite hin schräg verlaufender Bodenwandung 13f dargestellt ist, ist in Fig. 12 eine symmetrische Ausführung des Hauptbehälters 2g dargestellt, bei der der Sumpfraum 12g mittig liegt und die Bodenwandung 13g von dort aus nach beiden Seiten schräg aufwärts verläuft.

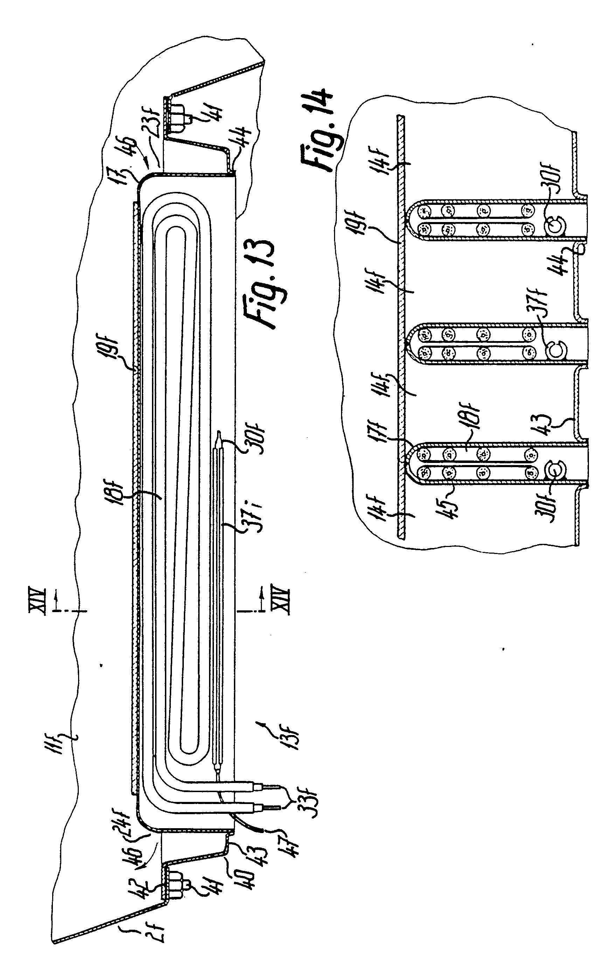

In den Fig. 13 und 14 ist die Beheizung im Detail dargestellt. Die Bodenwandung 13f ist nahezu über ihre gesamte Fläche von einem Einsatzträger 40 gebildet, der aus einem schalenförmig vertieften Blechteil besteht, dessen umlaufender Flanschrand mit angepunkteten Stehbolzen 41 und zwischengelegter Dichtung 42 an der Wandung des Behälters 2f abdichtend angebracht ist. Er kann auch eingeschweißt sein.

Im Boden 43 des Einsatzträgers 40 sind langlochartige und mit einem nach außen umgelegten Rand 44 versehene tüllenartige Schlitze ausgestanzt, in die langgestreckte Taschen 17f mit der Querschnittsform eines umgekehrten, schmalen und hohen U eingeschweißt sind, wobei die unteren Ränder der Taschen 17f mit den unteren Kanten der Ränder 44 mit einer Stirnschweißung verbunden sind. Die über den größten Teil der Länge des Einsatzträgers 40 und damit der Bodenwandung 13f reichenden Taschen stehen im Behälterinneren rippenartig vor und bilden zwischen sich die Strömungsschächte 14f, deren Breite etwa das Zweifache und deren Tiefe etwa das Drei- bis Vierfache der Dicke der Taschen 17f beträgt.

Die Taschen 17f sind aus spiegelbildlich zueinander gekehrten, an einer mittleren Längsnaht miteinander verbundenen Halbschalen 45 aus rostfreiem Stahlblech zusammengesetzt und auf jede Halbschale ist ein Rohrheizkörper 18f aufgebracht, der in die Form einer umgelegten und daher vierfach liegenden Schlaufe geformt ist und dessen Anschlußenden 33f aus der U-förmigen, nach unten und damit zum Behälteräußeren hin offenen Tasche 17f herausragen. Der Rohrheizkörper 18f ist durch einen dem Hartlöten ähnlichen Vorgang angebracht, der als « Anlegieren » bezeichnet wird. Es wird dort mit einem Nickel-Phosphor-Lot gearbeitet, bei dem der metallische Mantel des Rohrheizkörpers und das Material der Tasche eine solche metallische Verbindung eingehen, daß sie thermisch praktisch nicht voneinander zu trennen sind, wobei das im Lötvorgang entweichende Phosphor dafür sorgt, dem Lot anfänglich einen niedrigeren Schmelzpunkt zu geben. Diese Verbindung ist außerordentlich temperaturbeständig und sorgt für den besten Wärmeübergang. Nach dem Aufbringen der Rohrheizkörper auf jede der Halbschalen werden jeweils zwei in der beschriebenen Weise miteinander verschweißt und danach in den Einsatzträger 40 eingeschweißt. Es ist jedoch auch möglich, diese zueinander parallelen, fast über die ganze Länge des Einsatzes reichenden Rippen oder Taschen 17f dadurch zu bilden, daß jeweils eine der Halbschalen einer Tasche zusammen mit dem entsprechenden Abschnitt des Bodens 43 und einer Halbschale der benachbarten Tasche ein U-förmiges Bauteil mit nach außen gerichtetem abgerundetem Rand und auf die Außenseite der Schenkel aufgebrachten Rohrheizkörpern bildet, wobei dann der Einsatzträger 40 durch Zusammenschweißen derartiger parallel zueinander gelegter Bauteile längs der Naht 29 gebildet werden würde. Es ist ferner auch möglich, Rippen oder Taschen in anderer Form vorzusehen und ggf. auch den Boden 43 mit außen in wärmeleitender Verbindung angebrachten Rohrheizkörpern zu versehen. Wichtig ist jedenfalls, daß wesentliche Wandabschnitte der Strömungsschächte 14f möglichst gleichmäßig beheizt werden.

Die zueinander parallelen Strömungsschächte 14f sind an ihrer Oberseite durch eine Abdeckung 19f in Form eines ebenen Bleches verschlossen und zwar im wesentlichen über ihre ganze Länge. Jeweils am Beginn und am Ende eines Strömungsschachtes 14f bzw. der schmalen Stirnkanten der Taschen 17f sind von der Abdeckung freie Bereiche vorgesehen, die eine Eintrittsöffnung 23f und eine Austrittsöffnung 24f bilden. Die Abdeckung 19f ist lose aufgelegt und durch nicht dargestellte Führungen bzw. Halterungen, beispielsweise in ein Loch der Abdeckung eingreifende Stifte an den Taschen oder an dem Behälter, in der dargestellten Lage festgelegt.

Durch die Erwärmung der Flüssigkeit in den Strömungsschächten 14f entsteht ein Auftrieb, der zu einer sehr zügigen Strömung in Richtung der Pfeile 46 und im gesamten Behälter sorgt, wie aus den Strömungspfeilen in den Fig. 11 und 12 zu erkennen ist. Dabei ist es vorteilhaft, daß im Bereich über dem Sumpfraum 12f die Strömung abwärts gerichtet ist und dann nach der Seite abgelenkt wird, weil dadurch eventuell mitgerissene Partikel in den Sumpfraum 14 heruntersinken können, der vom Ölumlauf ausgenommen ist und wegen der schlechten Wärmeleitung der Flüssigkeiten und der Tatsache, daß keine Konvektion vorliegt, wesentlich, nämlich ca. 100° C, kälter ist als der übrige Behälter. Die in Fig. 13 dargestellte vertiefte Form des Einsatzträgers 40 spart Platz im Behälter, da die Taschen 17f nur wenig über die Höhe des Behälterflansches hinwegragen ; es kann jedoch auch ein gerader Einsatzträger verwendet werden, der eine noch bessere Anströmung der Ein- und Austrittsöffnungen 23f,24f ermöglicht.

Die Regelung und Temperaturbegrenzung erfolgt über sog. Hydraulikregler, d. h. Temperaturregler mit einem mit Ausdehnungsflüssigkeit gefüllten System, das einen rohrförmigen Temperaturfühler 30f enthält, der über ein Kapillarrohr 47 mit einer nicht dargestellten Ausdehnungsdose verbunden ist, die auf einen Schnappschalter einwirkt. Der Temperaturfühler 30f ist parallel in relativ dichtem Abstand neben einer der Rohrheizkörperwindungen angeordnet, und zwar ebenfalls in wärmeleitender Verbindung mit der zugehörigen Wandung der Halbschale 45. Dies kann durch das in Fig. 15 und 16 dargestellte Wärmeleitelement 37i geschehen, das die Form eines U-förmigen, fast über die gesamte Länge des Temperaturfühlers reichenden Blechstreifens hat, der in seinem Mittelbereich an die Wandung der Halbschale 45 von innen anliegt oder -gelötet ist. Zwischen die U-förmigen Schenkel des Wärmeleitelementes wird der Temperaturfühler 30i eingelegt (Fig. 15) und danach werden die Schenkel um den meist rohrförmigen Temperaturfühler herumgelegt, so daß er eine gut wärmeleitende Verbindung zur Wandung hat. Durch den Abstand dieser Anordnung vom Rohrheizkörper 18f läßt sich die Größe des Wärmeeinflusses von der Beheizung bzw. vom beheizten Medium ändern. Dementsprechend kann ein Temperaturfühler zur Regelung und als Trockengehschutz in ähnlicher Weise angebracht werden, lediglich in unterschiedlichem Abstand von den Rohrheizkörpern. Beispielsweise könnte ein als Trockengehschutz vorgesehener Temperaturfühler in den Zwischenraum zwischen zwei Rohrheizkörpern eingesetzt werden.

## Patentansprüche

1. Elektrisch beheizte Friteuse mit einem durch Wandungen begrenzten und insbesondere mindestens einen herausnehmbaren Einsatz (27) aufweisenden Fritierfettraum (10) in einem Hauptbehälter, der im oberen Bereich einen Fritierraum (11) bildet und der zur Fettbeheizung außerhalb des Fritierfettraumes (10) im Bereich eines an die Unterseite des Fritierraumes (11) anschließenden Strömungsumwälz-Schachtes (14) für das Fritierfett mit einem elektrischen Heizkörper (18) versehen ist, wobei unter dem Fritierraum (11) ein gegenüber dessen Horizontalquerschnitten kleinerer Sumpfraum (12) vorgesehen sein kann, dadurch gekennzeichnet, daß der Heizkörper ein Rohrheizkörper (18) ist, dessen Rohrmantel selbst in flächiger, wärmeleitender, metallisch angeschlossener Verbindung mit wenigstens einer Wandung (15) des Strömungsumwälz-Schachtes (14) steht.

2. Friteuse nach Anspruch 1, dadurch gekennzeichnet, daß wenigstens ein Rohrheizkörper (18) in eine offene, hohle, aus der Wandung (15) herausgeformte Tasche, Sicke (17) oder dergleichen eingesetzt ist, wobei vorzugsweise Taschen, Sicken (17) oder dergleichen mit Rohrheizkörpern (18) unmittelbar benachbart übereinander annähernd über die ganze Höhe des Schachtes (14) nach Art einer Wandungswellung vorgesehen sind.

3. Friteuse nach Anspruch 1 oder 2, dadurch gekennzeichnet, daß die mit dem bzw. den Rohrheizkörpern (18) integrierte, zur nach oben zunehmenden Erweiterung des Strömungsumwälz-Schachtes (14) unter einem spitzen Winkel zur Vertikalen nach außen geneigte Wandung (15) nach außen in einen Stufenboden (13) des Fritierraumes (11) übergeht.

4. Friteuse nach einem der vorhergehenden Ansprüche, dadurch gekennzeichnet, daß eine Mehrzahl im wesentlichen ausschließlich stabförmig geradliniger Rohrheizkörper (18a) zwischen dem Sumpfraum (12a) und dem Fritierraum (11a) im wesentlichen horizontal und parallel zueinander angeordnet ist und daß die Rohrheizkörper (18a) vorzugsweise gleich lang und mit benachbarten Anschlußenden (33) angeordnet sind.

5. Friteuse nach einem der vorhergehenden Ansprüche, dadurch gekennzeichnet, daß im Fritierraum (11a), benachbart zum oberen Ende des Strömungsumwälz-Schachtes (14a) an einer Endwandung (28a) des Fritierraumes (11a) ein Fett-Temperaturfühler (29a) angeordnet ist, der vorzugsweise in Form eines mit einer Ausdehnungsflüssigkeit gefüllten, spiralförmig gekrümmten Fühlerrohres in eine Vertiefung an der Innenseite der zugehörigen Wandung (28a) eingesetzt ist.

6. Friteuse nach einem der vorhergehenden Ansprüche, dadurch gekennzeichnet, daß der Strömungsumwälz-Schacht (14) in aufsteigende, an den Seitenwänden (15) des Strömungsumwälz-Schachtes (14) liegende und unmittelbar durch mit Rohrheizkörpern (18) verbundene Wandungen (15) begrenzte sowie in absteigende Strömungskanäle (22, 25) unterteilt ist, von denen die oberen Enden (24) der aufsteigenden Strömungskanäle (22), gegen die jeweils benachbarte Wandung (21) des Fritierraumes (11) gerichtet, von der aufrechten Anordnung abweichend abgewinkelt im Bodenbereich des Fritierraumes (11) münden, wobei vorzugsweise zwischen den aufsteigenden Strömungskanälen (22) ein absteigender Strömungskanal (25) vorgesehen ist, der mit den aufsteigenden Strömungskanälen (22) gemeinsame Kanalwandungen (19) aufweist.

7. Friteuse nach einem der vorhergehenden Ansprüche, dadurch gekennzeichnet, daß das untere Ende (23a) mindestens eines im Strömungsumwälz-Schacht (14a) vorgesehenen Strömungskanales (22a, 25a) im Bereich des Sumpfraumes (12a) mündet, daß vorzugsweise mindestens ein Strömungskanal (22a, 25a) wenigstens teilweise durch einen herausnehmbaren, die inneren Begrenzungswände der äußeren Strömungskanäle (22a) bildenden, am unteren Ende einen Siebkorb (31) tragenden Einsatz (19a) gebildet ist und daß mindestens ein Strömungskanal (22a, 25a) eine Stützfläche für einen in den Fritierraum (11a) heraushebbar eingesetzten Fritierkorb aufweist, wobei am oberen Ende des Einsatzes querliegende Tragbügel (32) zur Abstützung auf dem Stufenboden (13a) und zur Auflage des Fritierkorbes vorgesehen sind.

8. Friteuse nach einem der vorhergehenden Ansprüche, dadurch gekennzeichnet, daß die, den Strömungsumwälz-Schacht (14f) sowie die Strömungskanäle begrenzenden, Wandungen (19f, 45) an einem Wandungs-Einsatzträger (40) angeordnet sind, der in die zugehörige Behälterwandung (13f), wie den Behälterboden, einsetzbar ist, daß die die Rohrheizkörper (18f) aufnehmenden Taschen (17f) oder dergleichen aus Halbschalen (45) zusammengesetzte, in die Behälter-Wandung (13f) eingeschweißte Taschen (17f) mit je mindestens einem Rohrheizkörper (18f) an jeder Halbschale (45) sind und daß die Strömungskanäle (14f) seitlich und gegebenenfalls unten von den die Rohrheizkörper (18f) aufnehmenden Wandungen begrenzt sind und an ihrer im Fritierfettraum (11f) liegenden Seite von einer abnehmbaren, aus Blech bestehenden Abdeckung (19f) begrenzt sind.

9. Friteuse nach einem der vorhergehenden Ansprüche, dadurch gekennzeichnet, daß in dem Strömungsumwälz-Schacht (14e) ein höchstens bis in den Fritierraum (11e) reichender, herausnehmbarer Verdrängungskörper (38) angeordnet ist, der vorzugsweise durch den die Strömungskanäle (22e, 25e) begrenzenden Einsatz (19e) gebildet ist und ein gegenüber den Strömungskanälen (22e, 25e) durch Hohlkammern (39) vergrößertes Verdrängungsvolumen aufweist.

10. Friteuse nach einem der vorhergehenden Ansprüche, dadurch gekennzeichnet, daß der jeweilige Rohrheizkörper unter Zwischenlage mindestens eines kompensierenden Wärme-Übertragungsstreifens (36) an der Wandung (15b) befestigt ist, der gegenüber der Wandung (15b) eine größere Kontaktfläche als gegenüber dem Rohrheizkörper (18b) hat und aus einem gegenüber der Wandung (15b) höhere Wärmeleitfähigkeit aufweisenden Werkstoff, wie Baustahl, besteht.

**Claims**

1. Electrically heated deep fat fryer with a frying fat area (10) bounded by walls and in particular having in a main container a frying fat area (10) having at least one removable insert (27) and which in the upper zone forms a frying area (11) and which is provided with an electric tubular heater (18) for heating the fat outside the frying fat area (10) in the vicinity of a frying fat flow circulating shaft (14) connected to the underside of the frying area (11), it being possible to provide below the frying area (11) a draining area (12) which is smaller than its horizontal cross-section, characterized in that the heater is a tubular heater (18), whose tube jacket is in flat, heat conducting, metallicly connected connection with at least one wall (15) of the flow circulating shaft (14).

2. Deep fat fryer according to claim 1, characterized in that at least one tubular heater (18) is inserted in an open, hollow pocket, corrugation (17) or the like shaped out of wall (15) and preferably pockets, corrugations (17) or the like with tubular heaters (18) are provided in directly adjacent superimposed manner approximately over the entire height of shaft (14) in the manner of a wall corrugation.

3. Deep fat fryer according to claims 1 or 2, characterized in that wall (15) outwardly inclined under an acute angle to the vertical for upwardly increasing widening of shaft (14) integrated with the tubular heater or heaters (18) passes outwards into a stepped bottom (13) of the frying area (11).

4. Deep fat fryer according to one of the preceding claims, characterized in that a plurality of substantially, exclusively rod-like, linear tubular heaters (18a) are arranged substantially horizontally and parallel to one another between the draining area (12a) and the frying area (11a) and that the tubular heaters (18a) are preferably arranged in equally long manner with adjacent connecting ends (33).

5. Deep fat fryer according to one of the preceding claims, characterized in that in the frying area (11a) adjacent to the upper end of the flow circulating shaft (14a) a fat temperature sensor (29a) is provided on one end wall (28a) of the frying area (11a) and is preferably in the form of a spirally curved sensor tube filled with an expansion fluid, being inserted in a depression on the inside of the associated wall (28a).

6. Deep fat fryer according to one of the preceding claims, characterized in that the flow circulating shaft (14) is subdivided into rising flow channels (22, 25) engaging on the side walls (15) of shaft (14) and bounded by walls (15) directly connected to tubular heaters (18) and into falling flow channels (25), whereof the upper ends (24) of the rising flow channels (22) are directed against the in each case adjacent wall (21) of the frying area (11), whilst diverging from the upright arrangement and issuing in bent manner into the bottom region of the frying area (11) and preferably between the rising flow channels (22) is provided a falling flow channel (25), which has common channel walls (19) with rising flow channel (22).

7. Deep fat fryer according to one of the preceding claims, characterized in that the lower end (23a) of at least one flow channel (22a, 25a) provided in the flow circulating shaft (14a) issues in the vicinity of the draining area (12a), that preferably at least one flow channel (22a, 25a) is at least partly formed by a removable insert (19a) forming the inner boundary walls of the outer flow channels (22a) and which carries a wire strainer (31) at the lower end and that at least one flow channel (22a, 25a) has a base surface for a frying basket inserted in removable manner in the frying area (11a), whilst being provided at the upper end of the insert with transverse support clips (32) for supporting the insert on the stepped bottom (13a) and for receiving the frying basket.

8. Deep fat fryer according to one of the preceding claims, characterized in that the walls (19f, 45) bounding the flow circulating shaft (14f) and the flow channels are located on a wall insert carrier (40), which can be inserted in the associated container wall (13f), like the container bottom, that the pockets (17) or the like receiving the tubular heaters (18f) are formed from half-shells (45) with in each case at least one tubular heater (18f) on each half-shell (45) and that the flow channels (14f) are bounded laterally and optionally at the bottom by the walls receiving the tubular heaters (18f) and are bounded on their side located in the frying fat area (11f) by a removable, sheet metal cover (19f).

9. Deep fat fryer according to one of the preceding claims, characterized in that the flow circulating shaft (14e) contains a removable displacer (38) extending at the most into the frying area (11e) and which is preferably formed by an insert (19e) bounding the flow channels (22e, 25e) and has a larger displacement volume compared with flow channels (22e, 25e) due to the hollow chambers (39).

10. Deep fat fryer according to one of the preceding claims, characterized in that, accompanied by the interposing of at least one compensating heat transfer strip (36), the particular tubular heater is fixed to wall (15b) and with respect to the latter has a larger contact surface than with respect to the tubular heater (18b) and is made from a material having a higher thermal conductivity than wall (15b), such as structural steel.

## Revendications

1. Friteuse à chauffage électrique, comportant un espace (10) logeant la graisse de friture, limité par des parois et comportant notamment au moins un insert (27) pouvant être ressorti, dans un récipient principal qui forme, dans sa partie supérieure, un espace de friture (11) et qui pour le chauffage de la graisse, est équipé d'un élément de chauffage électrique (18) situé à l'extérieur de l'espace (10) logeant la graisse de friture, au voisinage d'une cuve de recirculation (14) qui se raccorde à la partie inférieure de l'espace de friture (11) et sert à recevoir la graisse de friture, auquel cas il est possible de prévoir au-dessous de l'espace de friture (11) un espace de collecte (12) possédant des dimensions en coupe transversale horizontale inférieures à celles de l'espace de friture, caractérisée en ce que l'élément de chauffage est un élément de chauffage tubulaire (18), dont l'enveloppe tubulaire elle-même est raccordée, selon une liaison métallique thermoconductrice s'étendant sur une certaine surface, à au moins une paroi (15) de la cuve (14).

2. Friteuse selon la revendication 1, caractérisée en ce qu'au moins un élément de chauffage tubulaire (18) est inséré dans une cavité, moulure (17) ou analogue, ouverte, vide et formée par façonnage dans la paroi (15), auquel cas de préférence des cavités, moulures (17) ou analogues comportant des éléments de chauffage tubulaires (18) sont prévues en superposition et directement les unes à côté des autres, approximativement sur toute la longueur de la cuve (14), en formant une sorte d'ondulation de la paroi.

3. Friteuse selon la revendication 1 ou 2, caractérisée en ce que la paroi (15), qui est intégrée à l'(aux) élément(s) de chauffage tubulaire(s) (18), est inclinée vers l'extérieur sous un angle aigu par rapport à la verticale de manière à former l'élargissement, qui augmente vers le haut, de la cuve (14) de recirculation, se prolonge vers l'extérieur par une paroi inclinée (13) de l'espace de friture (11).

4. Friteuse selon l'une des revendications précédentes, caractérisée en ce qu'une multiplicité d'éléments de chauffage tubulaires rectilignes (18a), sensiblement exclusivement en forme de barreaux, sont disposés sensiblement horizontalement et parallèlement les uns aux autres entre l'espace de collecte (12a) et l'espace de friture (11a) et que les éléments de chauffage tubulaires (18a) possèdent de préférence des longueurs identiques et sont disposés de telle sorte que leurs extrémités de raccordement (33) sont voisines.

5. Friteuse selon l'une des revendications précédentes, caractérisée en ce que dans l'espace de friture (11a) se trouve disposé, au voisinage de l'extrémité supérieure de la cuve de recirculation (14a), sur une paroi terminale (28a) de l'espace de friture (11a), un capteur (29a) de température de la graisse, avantageusement sous la forme d'un tube rempli d'un liquide dilatable et recourbé avec une forme en spirale, et qui est inséré dans un renfoncement ménagé dans la face intérieure de la paroi (28a) associée.

6. Friteuse selon l'une des revendications précédentes, caractérisée en ce que la cuve de recirculation (14) est subdivisée en des canaux d'écoulement montants (22), qui sont situés sur les parois latérales (15) de la cuve de recirculation (14) et limités directement par des parois (15) reliées aux éléments de chauffage tubulaires (18), et en des canaux d'écoulement descendants (22, 25), que les extrémités supérieures (24) des canaux d'écoulement montants (22), qui sont dirigées vers la paroi voisine respective (21) de l'espace de friture (11), débouchent au voisinage du fond de l'espace de friture (11) en étant recourbées de manière à s'écarter de la disposition verticale, auquel cas il est prévu de préférence entre les canaux d'écoulement montants (22), un canal d'écoulement descendant (25) qui possède des parois (19) communes avec les canaux d'écoulement montants (22).

7. Friteuse selon l'une des revendications précédentes, caractérisée en ce que l'extrémité inférieure (23a) d'au moins un canal d'écoulement (22a, 25a) prévu dans la cuve de recirculation (14a), débouche dans la zone de l'espace de collecte (12a), que de préférence au moins un canal d'écoulement (22a, 25a) est formé au moins en partie par un insert (19a) pouvant être ressorti et qui forme les parois limites intérieures des canaux d'écoulement extérieurs (22a) et porte à son extrémité inférieure un panier d'égouttage (31), et qu'au moins un canal d'écoulement (22a, 25a) comporte une surface d'appui pour un panier de friture inséré, de manière à pouvoir en être ressorti, dans l'espace de friture (11a), auquel cas des étriers de support (32), qui s'étendent transversalement au niveau de l'extrémité supérieure de l'insert, sont prévus pour l'appui sur le fond étagé (13a) et pour le support du panier de friture.

8. Friteuse selon l'une des revendications précédentes, caractérisée en ce que les parois (19f,45), qui délimitent la cuve de recirculation (14f) ainsi que les canaux d'écoulement, sont disposées sur un support formant insert (40) de paroi, qui peut être inséré dans la paroi, associée (13f) du récipient, comme par exemple le fond du récipient, que les cavités (17f) ou analogues, qui reçoivent les éléments de chauffage tubulaires (18f) sont des cavités (17f) formées par la réunion de deux demi-coques (45), soudées dans la paroi (13f) du récipient, au moins un organe de chauffage tubulaire respectif (18f) étant prévu sur chaque demi-coque (45), et que les canaux d'écoulement (14f) sont limités latéralement et éventuellement à la partie inférieure par les parois recevant les organes de chauffage tubulaires (18f), et sont limités sur leur face située dans l'espace (11f) logeant la graisse de friture, par un revêtement amovible en tôle (19f).

9. Friteuse selon l'une des revendications précédentes, caractérisée en ce que dans la cuve de recirculation (14e) se trouve disposé un organe déplaceur (38), qui peut être ressorti, s'étend au maximum jusqu'à l'intérieur de l'espace de friture (11e), est formé de préférence par l'insert (19e) délimitant les canaux d'écoulement (22e, 25e) et possède un volume de déplacement accru par des cavités (39) par rapport aux canaux d'écoulement (22e, 25e).

10. Friteuse selon l'une des revendications précédentes, caractérisée en ce que l'élément de chauffage tubulaire, susdit est fixé à la paroi (15b) moyennant le montage intercalé d'au moins une bande compensatrice de transmission de chaleur (36), qui possède une surface de contact avec la paroi (15b), qui est plus étendue que sa surface de contact avec l'organe de chauffage tubulaire (18b) et est constituée en un matériau possédant une conductibilité thermique plus élevée que celle de la paroi (15b), comme par exemple de l'acier de construction.

Fig.1

Fig. 2

Fig. 3

Fig. 6

Fig. 5

Fig. 4

Fig. 7

Fig.9

Fig.8

Fig.10

Fig. 11

Fig. 15

Fig. 16

Fig. 12

4

Fig. 13

Fig. 14